# FASCICULE DE BREVET EUROPEEN

(11) **EP 4 392 218 B1**
(45) Date de publication et mention de la délivrance du brevet: **15.04.2026**
(21) Numéro de dépôt: 22769324.9
(22) Date de dépôt: 21.08.2022
(51) Int. Cl.: B29C 35/02, B29C 35/00, B29C 70/48, B29C 70/44, B29C 45/46, B29C 31/04, B29C 70/54, B29C 39/24, B29C 39/38

(54) **PROCÉDÉ DE FABRICATION D'UNE PIÈCE COMPOSITE, EN PARTICULIER AÉRONAUTIQUE ET INSTALLATION ASSOCIÉE**
VERFAHREN ZUR HERSTELLUNG EINES VERBUNDTEILS, INSBESONDERE EINES AERONAUTISCHEN VERBUNDTEILS, UND ZUGEHÖRIGES SYSTEM
METHOD FOR MANUFACTURING A COMPOSITE PART, IN PARTICULAR AN AERONAUTICAL COMPOSITE PART AND ASSOCIATED SYSTEM

(30) Priorité: 27.08.2021 FR 2108964
(43) Date de publication de la demande: 03.07.2024
(73) Titulaire: SAFRAN AIRCRAFT ENGINES, 75015 Paris (FR)
(72) Inventeur: MINERVINO, Mattéo, 77550 Moissy-Cramayel (FR); DROZ, Nicolas, 77550 Moissy-Cramayel (FR); GODON, Thierry Claude Henri, 77550 Moissy-Cramayel (FR); BLAISE, Maxime Marie Désiré, 77550 Moissy-Cramayel (FR)
(74) Mandataire: Gevers & Orès
(86) Numéro de dépôt international: PCT/FR2022/051591
(87) Numéro de publication internationale: WO 2023/026008

(56) Documents cités:
- EP-A1- 1 908 565
- EP-A1- 2 256 163
- EP-A1- 3 819 331
- US-A- 5 591 252

## Description

### Domaine technique de l'invention

La présente invention concerne un procédé de fabrication d'une pièce composite, en particulier une pièce composite aéronautique, ainsi qu'une installation pour la mise en œuvre d'un tel procédé.

### Arrière-plan technique

L'état de la technique comprend notamment les documents FR-A1-3 051 386, FR-A1-3 100 739, EP-A1-1 908 565, EP-A1-2 256 163, EP-A1-3 819 331, US-A-5,591,252 et FR-A1-3 101 570.

L'utilisation de matériaux composites est avantageuse dans l'industrie aéronautique notamment car ces matériaux ont des performances mécaniques intéressantes pour des masses relativement faibles.

Un procédé de fabrication d'une pièce composite pour l'industrie aéronautique, qui est bien connu de l'homme du métier, est le procédé de moulage RTM dont les initiales font référence à l'acronyme anglo-saxon de *Resin Transfer Molding.*

Il s'agit d'un procédé de réalisation d'une pièce en matériau composite à base de fibres imprégnées d'un mélange à base de résine. Un tel procédé est par exemple utilisé pour fabriquer une pièce composite aéronautique, telle qu'une pièce aubagée de turbomachine, par exemple une aube de soufflante ou un aubage de redresseur. Les fibres utilisées peuvent être des fibres de carbone et/ou de verre et/ou de kevlar, et/ou tout autre matériau.

Un procédé RTM comporte plusieurs étapes successives.

On commence par réaliser le tissage de fibres pour obtenir une ébauche de préforme en trois dimensions, puis on découpe l'ébauche pour obtenir une préforme présentant sensiblement la forme de la pièce aubagée à obtenir.

Cette préforme est alors disposée dans un moule, qui est refermé. Puis on injecte un mélange à base de résine à l'état liquide en maintenant une pression sur le mélange injecté pendant que l'on effectue la polymérisation de la pièce par chauffage.

La pièce obtenue est démoulée et d'éventuelles étapes d'usinage et/ou des opérations de collage peuvent être réalisées.

La ligne d'injection actuelle se compose :
- d'un cylindre d'injection où le mélange à base de résine est chauffé à une température entre 80°C et 120°C, après une phase de dégazage sous vide ;
- d'un réchauffeur dans lequel un durcisseur à l'état solide dans le mélange à base de résine est dissous et le mélange atteint la température optimale d'injection (entre 155°C et 170°C pour une résine de type PR520N), c'est-à-dire la température pour laquelle la viscosité est minimale (<100 cP) ;
- un moule sous presse, lorsque le mélange à base de résine a rempli la cavité et la préforme fibreuse disposée dans le moule est complétement imprégnée, l'ensemble est chauffé à la température de cuisson (entre 170°C et 200°C pour une résine de type PR520N) ;
- un système pour effectuer le vide de manière à éviter que de l'air puisse rester à l'intérieur de la cavité du moule et former des porosités et/ou des zones sèches. Le vide est également une aide pour l'infusion de la résine au sein des fibres constituant le renfort.

Avant l'étape d'injection, le mélange à base de résine est de façon connue préchauffé pour le rendre liquide. Le chauffage du mélange avant son injection dans le moule est très importante. Il est en effet important que l'un des composants du mélange, un durcisseur, se soit complètement dissout dans le mélange avant son contact avec la préforme car ce composant risquerait d'être filtré dans la préforme, et les propriétés mécaniques de la résine lors de la cuisson ne seraient pas respectées.

Dans la technique actuelle, le préchauffage du mélange à base de résine pour dissoudre le durcisseur est réalisé dans un réchauffeur dans lequel la résine est chauffée jusqu'à au moins 150°C (voire au moins 160°C).

Il existe différent type de réchauffeurs.

Il peut s'agir, par exemple, d'un réchauffeur appelé « thin film ». La résine circule entre deux parois chaudes sous forme d'une fine couche (environ 0,1 mm). L'échange thermique est optimisé par la faible épaisseur de résine qui est exposée au flux de chaleur. Le débit de résine qui peut être chauffé est cependant limité, ce qui conduit à une limitation de la taille maximale de la pièce à injecter.

Il peut aussi s'agir d'un réchauffeur constitué par une série de plaques chaudes superposées dans lesquelles au moins un canal en forme de serpentin est creusé. Le nombre de plaques et les dimensions du/des canaux déterminent le volume traité. La durée de la résine en son sein est directement reliée au débit et à son volume. La régulation de la température et du temps de passage de la résine dans le réchauffeur est alors complexe à maîtriser entraînant un risque de mauvaise dissolution du durcisseur ou une réticulation précoce de la résine entraînant une obstruction des conduits. Il peut encore s'agir d'un échangeur thermique avec un fluide caloporteur. Cette solution nécessite la présence d'un système secondaire de pompage et de réchauffe du fluide calorifique. Ce système est plus long, plus chère et plus difficile à mettre en œuvre que les solutions précédentes car il nécessite une étanchéité à chaud très performante.

Ainsi, les réchauffeurs connus sont des systèmes d'échange de chaleur dynamiques, avec beaucoup de paramètres à garder sous contrôle : la température des plaques, la température d'entrée de la résine, le temps de présence à l'intérieur du système, les débits de la résine, l'état d'avancement de la résine à l'entrée du système (qui peut influencer fortement sa viscosité), etc. La dissolution du durcisseur est donc difficile à contrôler.

Par ailleurs, un certain volume de résine reste perdu dans ces systèmes de réchauffeur, ce qui entraîne des pertes de résine importantes et un surcoût non négligeable.

La présente invention propose une solution à ces problèmes qui est simple, efficace et économique.

### Résumé de l'invention

L'invention concerne un procédé de fabrication d'une pièce composite, en particulier une pièce composite aéronautique, dans lequel le procédé comprend les étapes consistant à :
a) chauffer un mélange d'une résine polymérisable et d'un durcisseur à une température de dissolution et/ou pendant une durée de dissolution suffisantes pour obtenir une dissolution complète du durcisseur,
b) refroidir le mélange à une température de sécurisation de manière à empêcher au moins une réaction exothermique,
c) injecter ultérieurement ou immédiatement le mélange dans un moule comprenant une préforme fibreuse à une température d'injection égale ou supérieure à la température de dissolution.

Il a ainsi été observé que la dissolution du durcisseur dans la résine pouvait être obtenue par une étape de chauffage et être maintenue même lors d'un refroidissement du mélange.

Il n'est donc plus nécessaire de préchauffer le mélange avant l'injection dans un préchauffeur limitant le débit du mélange et par conséquent la taille de la pièce composite à fabriquer.

Par ailleurs, le durcisseur ne recristallisant pas dans la résine lorsque la température du mélange diminue, il est possible de ne pas injecter le mélange immédiatement mais dans une étape ultérieure.

Il est alors envisageable de simplifier le système utiliser et de limiter la quantité perdue de résine à la fin d'un procédé de fabrication d'une pièce.

Il est aussi possible d'augmenter le débit d'injection, ce qui permet la fabrication de pièces de grandes dimensions.

Le procédé permet d'une façon simple la dissolution du durcisseur dans la résine grâce à une étape de chauffage et une étape de refroidissement avant que ce mélange ne soit injecté dans le moule comprenant la préforme fibreuse.

Le procédé selon l'invention peut comprendre une ou plusieurs des caractéristiques suivantes, prises isolément les unes des autres ou en combinaison les unes avec les autres :
- la durée de dissolution est choisie de manière à ce que le pourcentage de réticulation de la résine soit inférieur à 5% ;
- la température de dissolution est choisie de manière à ce que le pourcentage de réticulation de la résine soit inférieur à 5% ;
- la température de dissolution est comprise entre 80 et 170 °C, de préférence entre 120 et 165°C ;
- la température d'injection est comprise entre 120 et 160°C ;
- l'étape a) de chauffage se fait avec un mélangeage du mélange ;
- l'étape b) de refroidissement se fait avec un mélangeage du mélange ;
- la température de sécurisation est inférieure à 80°C ;
- le passage de la température de dissolution à la température de sécurisation se fait en moins de 1 min ; l'homme du métier est à même d'adapter la vitesse de réduction de température pour respecter cette durée de moins de 1 min entre la valeur de la température de dissolution et la valeur de la température de sécurisation;
- le passage de la température de dissolution à la température de sécurisation se fait en moins de 10 sec ; l'homme du métier est à même d'adapter la vitesse de réduction de température pour respecter cette durée de moins de 10s entre la valeur de la température de dissolution et la valeur de la température de sécurisation;
- le passage de la température de dissolution à la température de sécurisation se fait en moins de 1 min pour une température de dissolution inférieure à 140 °C ; l'homme du métier est à même d'adapter la vitesse de réduction de température pour respecter cette durée de moins de 1min entre la valeur supérieure à 140°C et la valeur de la température de sécurisation;
- le passage de la température de dissolution à la température de sécurisation se fait en moins de 10 sec pour une température de dissolution supérieure à 140 °C ; l'homme du métier est à même d'adapter la vitesse de réduction de température pour respecter cette durée de moins de 10s entre la valeur supérieure à 140°C et la valeur de la température de sécurisation;
- les étapes a), b) et/ou c) du procédé se font sous vide ;
- le procédé comprend une étape de stockage du mélange entre l'étape b) et l'étape c) à une température de stockage supérieure à 0°C, de préférence une température comprise entre 0 °C et 5°C ;
- la pièce composite est une pièce composite aéronautique, par exemple une pièce aubagée de turbomachine, telle qu'une aube de soufflante.

La présente invention concerne également une installation pour la mise en œuvre d'un procédé tel que décrit précédemment.

Selon l'invention, l'installation comprend une zone de mélange de la résine et du durcisseur, un dispositif de dissolution du durcisseur pour réaliser les étapes a) et b) dudit procédé et un moule de réception d'une préforme fibreuse et d'injection de résine pour l'imprégnation de cette préforme pour réaliser l'étape c) dudit procédé.

L'installation selon l'invention peut comprendre une ou plusieurs des caractéristiques suivantes, prises isolément les unes des autres ou en combinaison les unes avec les autres :
- l'installation comprend une zone de chauffage pour réaliser l'étape a) dudit procédé ;
- l'installation comprend une zone de refroidissement pour réaliser l'étape b) dudit procédé ;
- l'installation comprend un moyen de pompage de manière à conduire le mélange de la zone de mélange vers le dispositif de dissolution du durcisseur ;
- l'installation comprend en outre une zone de stockage pour réaliser l'étape de stockage ;
- la zone de stockage est distincte de la zone de mélange, de la zone de chauffage, de la zone de refroidissement et/ou du moule.

L'installation peut comprendre tout élément permettant de réaliser les étapes du procédé évoqué dans ce qui précède.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue très schématique d'un premier exemple d'une installation selon l'invention de fabrication d'une pièce composite ;
[Fig.2] la figure 2 est une vue très schématique d'un deuxième exemple d'une installation selon l'invention de fabrication d'une pièce composite ;
[Fig.3] la figure 3 est une vue très schématique d'un troisième exemple d'une installation selon l'invention de fabrication d'une pièce composite ;
[Fig.4] la figure 4 est une vue très schématique d'un dispositif de dissolution de l'installation des figures 2 et 3 et d'un graphe montrant l'évolution de la température lors des étapes a) et b) du procédé selon l'invention en fonction de la longueur du dispositif ;
[Fig.5] la figure 5 est une vue très schématique d'un exemple de procédé selon l'invention de fabrication d'une pièce composite.

### Description détaillée de l'invention

De façon générale, un procédé de fabrication d'une pièce composite, notamment de pièce composite aéronautique comporte plusieurs étapes successives :
- réaliser le tissage de fibres pour obtenir une ébauche de préforme en trois dimensions,
- découper l'ébauche pour obtenir une préforme fibreuse 10 présentant sensiblement la forme de la pièce aéronautique à obtenir,
- disposer la préforme fibreuse 10 dans un moule 12,
- injecter un mélange à base de résine à l'état liquide en maintenant une pression pendant que l'on effectue la polymérisation de la pièce par chauffage.

La pièce composite est une pièce composite aéronautique, par exemple une pièce aubagée de turbomachine, telle qu'une aube de soufflante.

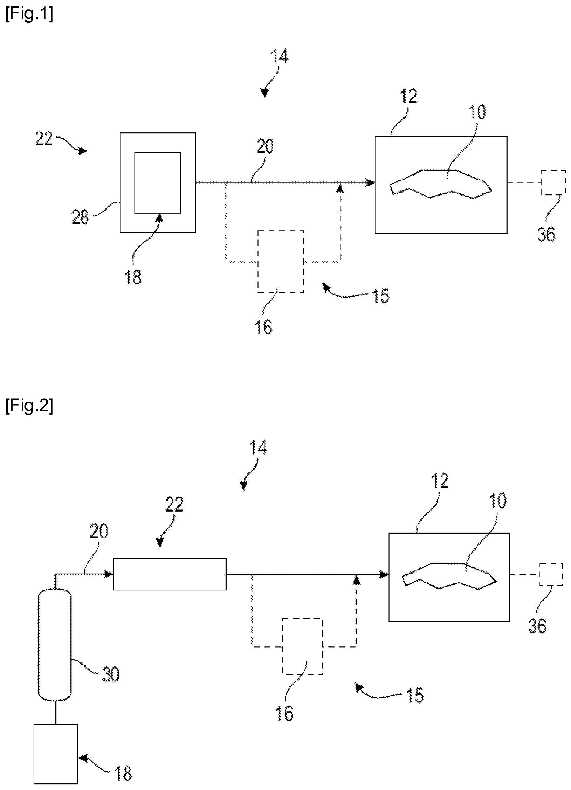

Des exemples d'installations 14 permettant de mettre en œuvre un tel procédé sont illustrés aux figures 1 à 3.

Classiquement, le mélange à base de résine comprend au moins une résine polymérisable et un durcisseur.

De façon avantageuse, la résine est un matériau thermodurcissable. De préférence, la résine est sous forme liquide. Il peut s'agir, par exemple, des polyépoxydes (ou époxydes) ou de polyimides ou de polybismaléimides. De préférence, la résine est une résine polyépoxyde, par exemple la résine PR520N commercialisée par Solvay, à base de DiGlycidyl Ether de Bisphénol F (DGEBF) ou la résine 2896, commercialisée par 3M à base de DiGlycidyl Ether de Bisphénol A (DGEBA).

Le durcisseur est un agent de réticulation qui déclenche la polymérisation et le durcissement irréversible de la résine sous l'effet de la chaleur.

De préférence, le durcisseur est sous forme solide.

De façon avantageuse, le durcisseur est choisi parmi, par exemple, le 9,9-Bis(4-amino-3chlorophényl)fluorène (CAF), l'acide 1,12-dodécanedioïque (DDA), le 4,4'-diamino-diphénylsulfone (DDS), l'hexaméthylène diamine (HDMA).

Le mélange peut comprendre en outre d'autres composants tels qu'une charge. De préférence, la charge représente moins de 30% en masse du mélange, 10% maximum pour les charges élastomères. Elle a pour objectif d'améliorer certaines caractéristiques physico-chimiques et/ou mécaniques du produit.

Pour un résultat optimal, notamment au niveau des propriétés mécaniques de la résine après cuisson, le durcisseur doit être dissout dans la résine avant l'injection dans le moule 12.

Ainsi selon l'invention, le procédé de fabrication d'une pièce composite, en particulier une pièce composite aéronautique, comprend en outre les étapes consistant à :
a) chauffer le mélange de résine polymérisable et du durcisseur à une température de dissolution et/ou pendant une durée de dissolution suffisantes pour obtenir une dissolution complète du durcisseur, et
b) refroidir le mélange à une température de sécurisation de manière à empêcher au moins une réaction exothermique.

Par la suite, dans une étape c), le mélange est injecté, ultérieurement ou immédiatement après le refroidissement du mélange, dans le moule 12 comprenant la préforme fibreuse 10. L'injection du mélange se fait à une température d'injection égale ou supérieure à la température de dissolution. Le procédé selon l'invention s'applique par exemple à la fabrication d'une pièce aubagée, telle qu'une aube et en particulier une aube de soufflante. Lors de l'étape a) de chauffage, le mélange est chauffé de manière à ce que le durcisseur se dissout, c'est-à-dire passe de l'état solide à l'état liquide et se mélange à la résine liquide.

De façon avantageuse, la durée de dissolution lors de l'étape de chauffage a) est choisie de manière à ce que le pourcentage de réticulation de la résine soit inférieur à 5%.

Ainsi, la durée de dissolution est comprise entre 2 et 60 min, de préférence entre 2 et 30 min, plus préférentiellement entre 2 et 15 min.

De même, de façon avantageuse, la température de dissolution est choisie de manière à ce que le pourcentage de réticulation de la résine soit inférieur à 5%.

Ainsi, de préférence, la température de dissolution est comprise entre 80 et 170 °C, de préférence entre 120 et 165°C. Cette température est choisie et adaptée en fonction du type de résine et de type de durcisseur. Par exemple, pour la résine PR520N, mélange d'un polymère type DBEGF et de durcisseur CAF, la température de dissolution est comprise entre 155°C et 170°C, de préférence la température de dissolution est d'environ 160 °C. Un pourcentage de réticulation de la résine inférieur à 5% permet que le mélange ait une viscosité adéquate pour être injectée dans le moule 12.

Par ailleurs, pour améliorer et faciliter la dissolution du durcisseur et obtenir ainsi une dissolution satisfaisante et totale du durcisseur, l'étape a) de chauffage et/ou l'étape b) de refroidissement peut se faire avec un mélangeage du mélange.

De façon avantageuse, les étapes a), b) et/ou c) du procédé peuvent se faire sous vide. Cela permet, notamment, d'éviter d'incorporer dans le mélange de l'air qui pourrait ensuite pénaliser son comportement pendant l'injection et d'éviter que de l'air puisse rester à l'intérieur de la cavité du moule 12 et former des porosités et/ou des zones sèches. Le vide est également une aide pour l'infusion de la résine au sein des fibres constituant la préforme 10. Lors de l'étape d'injection, classiquement, la température d'injection est comprise entre 120 et 160°C.

De façon avantageuse, le procédé peut comprendre en outre une étape de stockage du mélange entre l'étape b) et l'étape c) à une température de stockage supérieure à 0 °C, de préférence comprise entre 0 °C et 5°C.

Il a ainsi été observé qu'après refroidissement, le mélange de résine et de durcisseur dissout pouvait être conservé à des températures inférieures à la température de dissolution ou à la température d'injection. En effet, contre toute attente, le durcisseur ne recristallise pas après redescente en température, notamment lors de l'étape b) de refroidissement. Le durcisseur dissous reste à l'état liquide si la résine est maintenue à une température supérieure à 0°C, de préférence une température comprise entre 0 °C et 5°C. Il n'est donc pas nécessaire d'injecter immédiatement le mélange dans le moule 12. Celui-ci peut être stocké, par exemple dans une zone de stockage 15 à une température de stockage supérieure à 0°C, de préférence une température comprise entre 0 °C et 5°C, comme cela est représenté aux figures 1 à 3.

De façon avantageuse, la zone de stockage 15 est distincte, indépendante de la zone de mélange 18, de la zone de chauffage 24, de la zone de refroidissement 26 et/ou du moule 12. Ainsi, la zone de stockage 15 peut être une zone non liée, non attachée aux autres zones de l'installation 14 et ne pas en dépendre. Autrement dit, la zone de stockage 15 peut être une zone extérieure aux autres zones et fonctionner de manière autonome et non liée.

La zone de stockage 15 peut être par exemple un bidon 16.

Le mélange de résine et de durcisseur dissout pourra alors être injecté par la suite dans un moule 12 sans devoir intégrer au procédé une étape de préchauffage pour dissoudre le durcisseur. Cela permet un gain de temps mais aussi de simplifier l'installation 14 de fabrication.

Des exemples d'installation 14 de fabrication d'une pièce composite permettant la mise en œuvre du procédé selon l'invention sont représentés aux figures 1 à 3.

Dans chacun des exemples, l'installation 14 comprend pour l'essentiel :
- une zone de mélange 18 d'une résine polymérisable et du durcisseur,
- un moule 12 de réception d'une préforme fibreuse 10 et d'injection de résine pour l'imprégnation de cette préforme 10,
- un système 20 de conduits pour conduire la résine d'un élément de l'installation 14 vers un autre.

L'installation 14 peut comprendre en outre d'autres éléments, représentés ou non dans les dessins.

Les différents éléments de l'installation 14 peuvent être reliés à des moyens de contrôle et de commande à distance, tels que des moyens informatisés par exemple.

Selon l'invention, l'installation 14 comprend un dispositif 22 de dissolution du durcisseur.

Le dispositif 22 de dissolution du durcisseur comprend une zone de chauffage 24 et une zone de refroidissement 26.

La zone de chauffage 24 permet de réaliser l'étape a) du procédé selon l'invention et décrite ci-dessus, c'est-à-dire une étape dans laquelle le mélange de résine polymérisable et du durcisseur est chauffé à une température de dissolution et/ou pendant une durée de dissolution suffisantes pour obtenir une dissolution complète du durcisseur.

La zone de refroidissement 26 permet de réaliser l'étape b) du procédé selon l'invention et décrite ci-dessus, c'est-à-dire une étape dans laquelle le mélange est refroidi à une température de sécurisation de manière à empêcher au moins une réaction exothermique.

Un premier exemple de réalisation d'une installation 14 permettant la mise en œuvre du procédé selon l'invention est illustré à la figure 1.

Dans ce premier exemple, les zones de chauffage 24 et de refroidissement 26 sont un four 28 qui constitue le dispositif 22 de dissolution du durcisseur. Le mélange de résine et de durcisseur contenu dans la zone de mélange 18 est placé dans un four 28. La zone de mélange 18 peut être, comme ici, un bidon, tel que le bidon dans lequel la résine est approvisionnée.

Une fois placé dans le four 28, le mélange subit un cycle thermique qui entraine la dissolution du durcisseur. La température du four 28, les rampes de chauffe, les durées des paliers sont sélectionnées de manière à obtenir une dissolution complète du durcisseur, et préférentiellement un pourcentage de réticulation de la résine inférieur à 5% comme décrit ci-dessus.

Le mélange est ensuite refroidi, en abaissant la température du four 28, par exemple, à une température de sécurisation de manière à empêcher au moins une réaction exothermique comme décrit ci-dessus.

Le mélange peut par la suite soit être stocké dans la zone de stockage 15, tel qu'un bidon ou le bidon 16 dans lequel la résine est approvisionnée, pour une injection ultérieure dans le moule 12, soit être directement injecté dans le moule 12 comprenant la préforme fibreuse 10.

Pour améliorer la dissolution du durcisseur et/ou éviter des réactions exothermes, il est avantageux de disposer, par exemple dans le bidon 16, un système permettant de mettre en mouvement le mélange, afin d'homogénéiser la température entre le cœur du mélange et ses surfaces. Un deuxième exemple de réalisation d'une installation 14 permettant la mise en œuvre du procédé selon l'invention est illustré à la figure 2.

Dans ce deuxième exemple, le mélange de résine et de durcisseur contenu dans la zone de mélange 18, ici un bidon, tel que le bidon dans lequel la résine est approvisionnée, est chargé dans un piston 30 servant à l'amener jusqu'au dispositif 22 de dissolution du durcisseur.

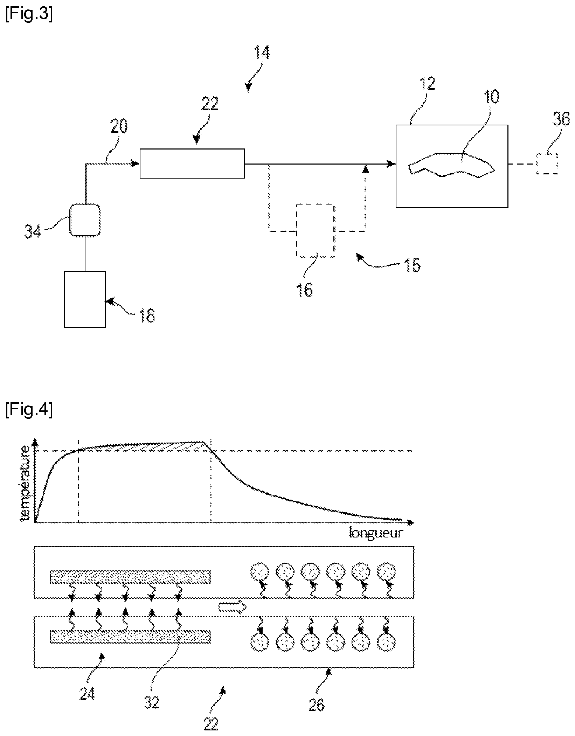

Dans cet exemple de dispositif 22 de dissolution illustré à la figure 4, le dispositif 22 de dissolution comprend la zone de chauffage 24 combinée à la zone de refroidissement 26.

Dans cet exemple, la zone de chauffage 24 est un réchauffeur de type « thin film » implémentée dans l'installation 14. Le réchauffeur de type « thin film » est un système comprenant deux parois 32 chaudes espacées, d'environ 0.3 mm par exemple, entre lesquelles le mélange circule sous la forme d'une fine couche. Les parois 32 peuvent être chauffées par des résistances électriques. Le système permet de chauffer le mélange très rapidement.

La zone de chauffage 24 est ensuite couplée à un système de refroidissement constituant la zone de refroidissement 26.

Par exemple, comme illustré au graphe de la figure 4, la résine PR520N peut être chauffée de 120 °C à 165 °C en moins de cinq secondes, maintenue à la température de dissolution le temps nécessaire pour que tout le durcisseur soit dissout, puis le mélange est rapidement refroidi pour atteindre la température de sécurisation.

Un troisième exemple de réalisation d'une installation 14 permettant la mise en œuvre du procédé selon l'invention est illustré à la figure 3.

Ce troisième exemple d'installation 14 diffère du deuxième exemple en ce qu'il comporte un moyen 34 de pompage permettant d'approvisionner le dispositif 22 de dissolution du durcisseur en mélange.

Le mélange de résine et de durcisseur contenu dans la zone de mélange 18, ici un bidon, tel que le bidon dans lequel la résine est approvisionnée, est prélevé par le moyen 34 de pompage pour l'amener jusqu'au dispositif 22 de dissolution du durcisseur.

Le moyen 34 de pompage comprend un piston qui met en pression le mélange de résine et de durcisseur à l'intérieur du bidon 16. Le mélange remonte alors jusqu'au dispositif 22 de dissolution du durcisseur.

Le dispositif 22 de dissolution du durcisseur peut être semblable à celui du deuxième exemple.

De façon avantageuse, les étapes a), b) et/ou c) du procédé peuvent se faire sous vide. Dans ce cas, l'installation peut comprendre un système 36 de mise sous vide permettant de réaliser un vide dans l'installation, notamment au niveau des éléments nécessitant d'être sous vide.

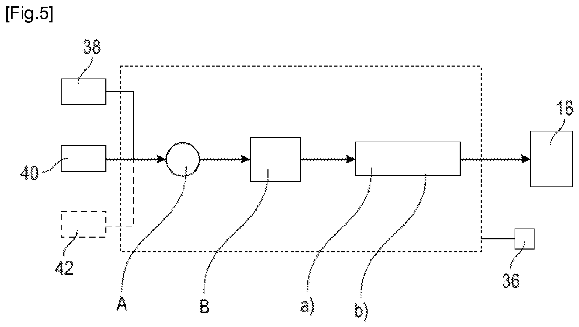

Comme illustré à la figure 5, l'étape de dissolution a) et l'étape de refroidissement b) peuvent aussi se faire lors de la préparation du mélange, chez le fournisseur par exemple.

Dans une étape de mélangeage A), la résine 38 liquide est mélangée avec le durcisseur 40 solide et éventuellement d'autres composants tels qu'une charge 42 solide, de façon connue et de manière à obtenir un mélange homogène. Cette étape de mélange A) peut se faire par exemple dans un mixer.

Les éventuels agrégats peuvent être éliminés dans une étape d'élimination B) des agrégats en effectuant un traitement spécifique à la rupture et dispersion des agglomérats de particules solides. Il peut s'agir d'extrusion, de laminage ou toutes autres techniques connues dans le métier.

Le mélange est ensuite chauffé de manière à réaliser l'étape a) du procédé selon l'invention et obtenir une dissolution complète du durcisseur, puis refroidi de manière à réaliser l'étape b) du procédé selon l'invention pour empêcher au moins une réaction exothermique.

De façon avantageuse, le mélange est déchargé du mixer au travers d'une pression appliquée à l'intérieur du mixer pour être mis en pot(s) ou en bidon(s) 16 mentionnée précédemment. Cela permet de vider complétement la ligne de fabrication du mélange et de réduire fortement le gaspillage de résine.

Les pots ou bidons 16 peuvent être ensuite stockés dans la zone de stockage 15 telle que décrite précédemment.

De façon avantageuse, dans cet exemple, les étapes A), B), a) et/ou b) du procédé peuvent se faire sous vide. Dans ce cas, un système 36 de mise sous vide permet de réaliser le vide dans l'installation, notamment au niveau des éléments nécessitant d'être sous vide.

Le mélange ainsi obtenu peut être par la suite directement injectée dans le moule 12 selon l'étape c) du procédé selon l'invention sans une étape préliminaire de préchauffage pour dissoudre le durcisseur.

## Revendications

1. Procédé de fabrication d'une pièce composite, en particulier une pièce composite aéronautique, dans lequel le procédé comprend les étapes consistant à :
a) chauffer un mélange d'une résine polymérisable et d'un durcisseur à une température de dissolution et/ou pendant une durée de dissolution suffisantes pour obtenir une dissolution complète du durcisseur,
b) refroidir le mélange à une température de sécurisation de manière à empêcher au moins une réaction exothermique,
c) injecter ultérieurement ou immédiatement le mélange dans un moule (12) comprenant une préforme fibreuse (10) à une température d'injection égale ou supérieure à la température de dissolution.

2. Procédé selon la revendication précédente, dans lequel la durée de dissolution et/ou la température de dissolution sont choisies de manière à ce que le pourcentage de réticulation de la résine soit inférieur à 5%.

3. Procédé selon l'une quelconque des revendications précédentes, dans lequel la température de dissolution est comprise entre 80 et 170 °C, de préférence entre 120 et 165°C.

4. Procédé selon l'une quelconque des revendications précédentes, dans lequel la température d'injection est comprise entre 120 et 160°C.

5. Procédé selon l'une quelconque des revendications précédentes, dans lequel l'étape a) de chauffage et/ou l'étape b) de refroidissement se font avec un mélangeage du mélange.

6. Procédé selon l'une quelconque des revendications précédentes, dans lequel la température de sécurisation est inférieure à 80°C.

7. Procédé selon l'une quelconque des revendications précédentes, dans lequel le mélange est refroidi avec adaptation de la vitesse de réduction de température de manière à ce que le passage de la température de dissolution à la température de sécurisation est réalisé en moins de 1 min voire en moins de 10s.

8. Procédé selon la revendication précédente, dans lequel la température de dissolution est supérieure à 140°C.

9. Procédé selon l'une quelconque des revendications précédentes, dans lequel les étapes a), b) et/ou c) du procédé se font sous vide.

10. Procédé selon l'une quelconque des revendications précédentes, dans lequel le procédé comprend une étape de stockage du mélange entre l'étape b) et l'étape c) à une température de stockage supérieure à 0°C, de préférence comprise entre 0 °C et 5°C.

11. Installation (14) pour la mise en œuvre du procédé selon l'une quelconque des revendications précédentes, comprenant une zone de mélange (18) de la résine et du durcisseur, un dispositif (22) de dissolution du durcisseur pour réaliser les étapes a) et b) dudit procédé et un moule (12) de réception d'une préforme fibreuse (10) et d'injection de résine pour l'imprégnation de cette préforme (10) pour réaliser l'étape c) dudit procédé.

12. Installation (14) selon la revendication précédente, dans laquelle le dispositif (22) de dissolution du durcisseur comprend une zone de chauffage (24) pour réaliser l'étape a) dudit procédé et une zone de refroidissement (26) pour réaliser l'étape b) dudit procédé.

13. Installation (14) selon l'une quelconque des revendications 11 ou 12 comprenant un moyen (34) de pompage de manière à conduire le mélange de la zone de mélange (18) vers le dispositif (22) de dissolution du durcisseur.

14. Installation (14) selon l'une quelconque des revendications 11 à 13 prises en combinaison avec la revendication 10, comprenant en outre une zone de stockage (15) pour réaliser l'étape de stockage, la zone de stockage (15) étant distincte de la zone de mélange (18), de la zone de chauffage (24), de la zone de refroidissement (26) et/ou du moule (12).

## Patentansprüche

1. Verfahren zur Herstellung eines Verbundteils, insbesondere eines aeronautischen Verbundteils, wobei das Verfahren die Schritte umfasst, die aus Folgendem bestehen:
a) Erhitzen einer Mischung aus einem polymerisierbaren Harz und einem Härtemitel auf eine Auflösungstemperatur und/oder während einer Auflösungsdauer, die ausreichen, um eine vollständige Auflösung des Härtemittels zu erhalten,
b) Abkühlen der Mischung auf eine Sicherungstemperatur auf solche Weise, dass mindestens eine exothermische Reaktion verhindert wird,
c) späteres oder sofortiges Einspritzen der Mischung in eine Form (12), die eine faserhaltige Vorform (10) umfasst, bei einer Einspritztemperatur, die gleich oder höher als die Auflösungstemperatur ist.

2. Verfahren nach dem vorstehenden Anspruch, wobei die Auflösungsdauer und/oder die Auflösungstemperatur auf solche Weise ausgewählt werden, dass der Prozentsatz der Retikulation des Harzes kleiner als 5% ist.

3. Verfahren nach einem der vorstehenden Ansprüche, wobei die Auflösungstemperatur zwischen 80 und 170°C, vorzugsweise zwischen 120 und 165°C beträgt.

4. Verfahren nach einem der vorstehenden Ansprüche, wobei die Einspritztemperatur zwischen 120 und 160°C beträgt.

5. Verfahren nach einem der vorstehenden Ansprüche, wobei der Schritt a) des Erhitzens und/oder der Schritt b) des Abkühlens mit einem Mischen der Mischung vorgenommen werden.

6. Verfahren nach einem der vorstehenden Ansprüche, wobei die Sicherungstemperatur niedriger als 80°C ist.

7. Verfahren nach einem der vorstehenden Ansprüche, wobei die Mischung über die Anpassung der Temperatursenkungsgeschwindigkeit auf solche Weise abgekühlt wird, dass der Übergang von der Auflösungstemperatur zur Sicherungstemperatur in weniger als 1 min, sogar in weniger als 10 s durchgeführt wird.

8. Verfahren nach dem vorstehenden Anspruch, wobei die Auflösungstemperatur höher als 140°C ist.

9. Verfahren nach einem der vorstehenden Ansprüche, wobei die Schritte a), b) und/oder c) des Verfahrens im Vakuum vorgenommen werden.

10. Verfahren nach einem der vorstehenden Ansprüche, wobei das Verfahren einen Schritt des Lagerns der Mischung zwischen dem Schritt b) und dem Schritt c) bei einer Lagertemperatur höher als 0°C, vorzugsweise zwischen 0°C und 5°C umfasst.

11. Anlage (14) für den Einsatz des Verfahrens nach einem der vorstehenden Ansprüche, umfassend einen Mischbereich (18) des Harzes und des Härtemittels, eine Vorrichtung (22) zur Auflösung des Härtemittels, um die Schritte a) und b) des Verfahrens durchzuführen, und eine Form (12) zur Aufnahme einer faserhaltigen Vorform (10) und zum Einspritzen von Harz für die Imprägnierung dieser Vorform (10) zum Durchführen des Schrittes c) des Verfahrens.

12. Anlage (14) nach dem vorstehenden Anspruch, wobei die Vorrichtung (22) zur Auflösung des Härtemittels einen Heizbereich (24) zum Durchführen des Schrittes a) des Verfahrens und einen Abkühlungsbereich (26) zum Durchführen des Schrittes b) des Verfahrens umfasst.

13. Anlage (14) nach einem der Ansprüche 11 oder 12, umfassend ein Mittel (34) zum Pumpen auf solche Weise, dass die Mischung vom Mischbereich (18) zur Vorrichtung (22) zur Auflösung des Härtemittels geleitet wird.

14. Anlage (14) nach einem der Ansprüche 11 bis 13, in Kombination mit dem Anspruch 10 genommen, weiter umfassend einen Lagerbereich (15) zum Durchführen des Lagerschrittes, wobei sich der Lagerbereich (15) vom Mischbereich (18), dem Heizbereich (24), dem Abkühlungsbereich (26) und/oder der Form (12) unterscheidet.

## Claims

1. A method for manufacturing a composite part, in particular an aeronautical composite part, wherein the method comprises the steps of:
a) heating a mixture of a polymerisable resin and a curing agent to a dissolving temperature and/or for a dissolving time sufficient to obtain a complete dissolution of the curing agent,
b) cooling the mixture to a safety temperature so as to prevent at least one exothermic reaction,
c) subsequently or immediately injecting the mixture into a mould (12) comprising a fibrous preform (10) at an injection temperature equal to or higher than the dissolution temperature.

2. The method according to the preceding claim, wherein the dissolution time and/or the dissolution temperature are chosen so that the percentage of crosslinking of the resin is less than 5%.

3. The method according to any one of the preceding claims, wherein the dissolution temperature is between 80 and 170°C, preferably between 120 and 165°C.

4. The method according to any one of the preceding claims, wherein the injection temperature is between 120 and 160°C.

5. The method according to any one of the preceding claims, wherein the heating step a) and/or the cooling step b) are carried out with mixing of the mixture.

6. The method according to any of the preceding claims, wherein the safety temperature is less than 80°C.

7. The method according to any one of the preceding claims, wherein the mixture is cooled with adaptation of the temperature reduction rate so that the transition from the dissolution temperature to the safety temperature is carried out in less than 1 min or even in less than 10 s.

8. The method according to the preceding claim, wherein the dissolution temperature is greater than 140°C.

9. The method according to any one of the preceding claims, wherein steps a), b) and/or c) of the method are carried out under vacuum.

10. The method according to any one of the preceding claims, wherein the method comprises a step of storing the mixture between step b) and step c) at a storage temperature above 0°C, preferably between 0°C and 5°C.

11. A system (14) for implementing the method according to any one of the preceding claims, comprising an area (18) for mixing the resin and the curing agent, a device (22) for dissolving the curing agent in order to carry out steps a) and b) of said method and a mould (12) for receiving a fibrous preform (10) and for injecting resin for impregnating said preform (10) in order to carry out step c) of said method.

12. The system (14) according to the preceding claim, wherein the device (22) for dissolving the curing agent comprises a heating area (24) for carrying out step a) of said method and a cooling area (26) for carrying out step b) of said method.

13. The system (14) according to any one of claims 11 or 12, comprising a pumping means (34) for conveying the mixture from the mixing area (18) towards the device (22) for dissolving the curing agent.

14. The system (14) according to any one of claims 11 to 13 taken in combination with claim 10, further comprising a storage area (15) for carrying out the storage step, the storage area (15) being separate from the mixing area (18), the heating area (24), the cooling area (26) and/or the mould (12).
